# EUROPEAN PATENT APPLICATION

(11) **EP 4 613 595 A1**
(43) Date of publication of application: **10.09.2025**
(21) Application number: 22967613.5
(22) Date of filing: 09.12.2022
(51) Int. Cl.: B60W 30/182, B60W 50/02, H04L 27/00

(54) **COMMUNICATION METHOD AND APPARATUS**

(71) Applicant: Shenzhen Yinwang Intelligent Technologies Co., Ltd., Shenzhen, Guangdong 518129 (CN)
(72) Inventor: CHENG, Baochuan, Shenzhen, Guangdong 518129 (CN); LI, Lei, Shenzhen, Guangdong 518129 (CN); WANG, Yongjian, Shenzhen, Guangdong 518129 (CN); YAN, Li, Shenzhen, Guangdong 518129 (CN)
(74) Representative: MERH-IP Matias Erny Reichl Hoffmann Patentanwälte PartG mbB
(86) International application number: PCT/CN2022/137769
(87) International publication number: WO 2024/119459

(57) **Abstract**

This application provides a communication method and apparatus. **In** the communication method provided in this application, after determining autonomous driving operation adjustment information of a first autonomous driving device based on a fault level of the first autonomous driving device, a first computing platform in the first autonomous driving device broadcasts the autonomous driving operation adjustment information, where the autonomous driving operation adjustment information indicates an autonomous driving operation that needs to be performed by the first autonomous driving device. Correspondingly, for a second autonomous driving device that receives the autonomous driving operation adjustment information, a target traveling path is determined based on the autonomous driving operation adjustment information, where the target traveling path is available for avoiding a collision between the second autonomous driving device and the first autonomous driving device. Technical solutions provided in this application help improve safety of a vehicle during occurrence of a take over request.

## Description

### TECHNICAL FIELD

This application relates to the field of autonomous driving technologies, and in particular, to a communication method and apparatus.

### BACKGROUND

In the field of autonomous driving technologies, when an autonomous vehicle cannot autonomously complete a driving operation, a driver needs to immediately take over, to ensure safe traveling of the autonomous vehicle. In this field, a process in which the autonomous vehicle requires the driver to take over is referred to as a take over request (take over request, TOR) process.

Currently, when an autonomous vehicle requires a driver to take over immediately, the autonomous vehicle makes the "best effort" to achieve an emergency stop or send a take over request (take over request, TOR) signal to notify the driver to take over.

However, in a process in which the current vehicle sends the take over request, safety is low.

### SUMMARY

This application provides a communication method and apparatus, to help improve safety of a vehicle in a process of sending a take over request.

According to a first aspect, this application provides a communication method, applied to a first computing platform, where the first computing platform is deployed in a first autonomous driving device, and the method includes: determining a fault level of the first autonomous driving device; determining autonomous driving operation adjustment information of the first autonomous driving device based on the fault level, where the autonomous driving operation adjustment information indicates an autonomous driving operation that needs to be performed by the first autonomous driving device; and broadcasting the autonomous driving operation adjustment information.

For example, the first computing platform broadcasts the autonomous driving operation adjustment information based on a vehicle-to-everything (vehicle-to-everything, V2X) technology.

For example, the first autonomous driving device is an autonomous vehicle.

For example, the first computing platform is a mobile data center (mobile data center, MDC), or a device or a chip that implements a function similar to that of an MDC.

In the technical solution provided in this application, after the first computing platform in the first autonomous driving device determines the autonomous driving operation adjustment information of the first autonomous driving device based on the fault level of the first autonomous driving device, the autonomous driving operation adjustment information of the first autonomous driving device is broadcast to warn another device in advance. Correspondingly, the second autonomous driving device that receives the autonomous driving operation adjustment information broadcast by the first autonomous driving device may plan, based on the autonomous driving operation that needs to be performed by the first autonomous driving device and that is indicated by the autonomous driving operation adjustment information broadcast by the first autonomous driving device, a target traveling path that can avoid a collision between the second autonomous driving device and the first autonomous driving device, to avoid a collision with the first autonomous driving device in advance.

With reference to the first aspect, in a possible implementation, the method further includes: determining, based on the autonomous driving operation adjustment information, whether to request a driver of the first autonomous driving device to take over the first autonomous driving device; and outputting a take over request TOR when determining to request the driver of the first autonomous driving device to take over the first autonomous driving device, where the TOR indicates the driver of the first autonomous driving device to take over the first autonomous driving device.

It should be noted herein that a form of how to output the TOR is not limited in this implementation. For example, an alarm is generated through a voice like beeps of "Didi" or "Dudu", or through displaying of the alarm on a dashboard.

In this implementation, the first computing platform may prompt, in a manner of outputting the TOR, the driver to take over. This helps ensure safe traveling of the first autonomous driving device when the first autonomous driving device cannot complete autonomous driving.

With reference to the first aspect, in a possible implementation, the autonomous driving operation includes any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time. The "exiting" means "exiting an autonomous driving mode".

With reference to the first aspect, in a possible implementation, the determining autonomous driving operation adjustment information of the first autonomous driving device based on the fault level includes: determining the autonomous driving operation adjustment information of the first autonomous driving device based on the fault level and a preset mapping relationship between a fault level and autonomous driving operation adjustment information.

During specific implementation, the mapping relationship between a fault level and autonomous driving operation adjustment information may be pre-stored in the first computing platform. After determining the fault level, the first computing platform may obtain, from the mapping relationship, autonomous driving operation adjustment information that has a mapping relationship with the fault level of the first autonomous driving device.

According to a second aspect, this application provides a communication method, applied to a second computing platform, where the second computing platform is deployed in a second autonomous driving device, and the method includes: receiving autonomous driving operation adjustment information broadcast by a first autonomous driving device, where the autonomous driving operation adjustment information indicates an autonomous driving operation that needs to be performed by the first autonomous driving device; and determining a target traveling path based on the autonomous driving operation adjustment information, where the target traveling path is available for avoiding a collision between the second autonomous driving device and the first autonomous driving device.

With reference to the second aspect, in a possible implementation, the method further includes: determining, based on the autonomous driving operation adjustment information, a target color corresponding to the first autonomous driving device, where different colors indicate different danger levels to a driver of the second autonomous driving device; and rendering the first autonomous driving device in the target color and displaying the target color on a display. The display may be a computer display or a head-up display (head-up display, HUD) on the autonomous driving device.

For example, when determining, based on the autonomous driving operation adjustment information broadcast by the first autonomous driving device, that the first autonomous driving device is autonomous driving and is not in danger, the second computing platform may render the first autonomous driving device in green and then display green on the display.

For example, when determining, based on the autonomous driving operation adjustment information broadcast by the first autonomous driving device, that the first autonomous driving device is driven by a driver and is not in danger, the second computing platform may render the first autonomous driving device in gray and then display gray on the display.

It may be understood that, in this implementation, the driver may view a danger level of the first autonomous driving device through the display, so that the driver can choose, based on the danger level, whether to perform self-takeover for avoidance, so as to prevent a collision with the first autonomous driving device.

With reference to the second aspect, in a possible implementation, the determining a target traveling path based on the autonomous driving operation adjustment information includes: receiving autonomous driving operation adjustment information broadcast by N other autonomous driving devices in a target region, where any one of the N autonomous driving devices is an autonomous driving device other than the first autonomous driving device in the target region; and determining the target traveling path based on the autonomous driving operation adjustment information of the first autonomous driving device and autonomous driving operation adjustment information of each of the N autonomous driving devices.

With reference to the second aspect, in a possible implementation, the autonomous driving operation includes any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time. The "exiting" means "exiting an autonomous driving mode".

With reference to the second aspect, in a possible implementation, the method further includes: broadcasting first information after receiving the autonomous driving operation adjustment information broadcast by the first autonomous driving device, where the first information includes the autonomous driving operation adjustment information and a first identifier, and the first identifier indicates the first autonomous driving device.

In this embodiment, the second computing platform that receives the autonomous driving operation adjustment information broadcast by the first autonomous driving device may further broadcast the first information. The first information includes the autonomous driving operation adjustment information broadcast by the first autonomous driving device and the first identifier, and the first identifier indicates the first autonomous driving device. In this way, the autonomous driving operation adjustment information of the first autonomous driving device can be broadcast farther, so that more other devices learn of the autonomous driving operation adjustment information of the first autonomous driving device.

According to a third aspect, this application provides a communication apparatus, deployed in a first autonomous driving device. The apparatus includes a processing module and a transceiver module. The processing module is configured to: determine a fault level of the first autonomous driving device; and determine autonomous driving operation adjustment information of the first autonomous driving device based on the fault level, where the autonomous driving operation adjustment information indicates an autonomous driving operation that needs to be performed by the first autonomous driving device; and the transceiver module is configured to broadcast the autonomous driving operation adjustment information.

With reference to the third aspect, in a possible implementation, the processing module is further configured to: determine, based on the autonomous driving operation adjustment information, whether to request a driver of the first autonomous driving device to take over the first autonomous driving device; and output a take over request TOR when determining to request the driver of the first autonomous driving device to take over the first autonomous driving device, where the TOR indicates the driver of the first autonomous driving device to take over the first autonomous driving device.

With reference to the third aspect, in a possible implementation, the first computing platform broadcasts the autonomous driving operation adjustment information based on a vehicle-to-everything V2X technology.

With reference to the third aspect, in a possible implementation, the autonomous driving operation includes any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

With reference to the third aspect, in a possible implementation, the processing module is further configured to determine the autonomous driving operation adjustment information of the first autonomous driving device based on the fault level and a preset mapping relationship between a fault level and autonomous driving operation adjustment information.

According to a fourth aspect, this application provides a communication apparatus, deployed in a second autonomous driving device. The apparatus includes a processing module and a transceiver module. The transceiver module is configured to receive autonomous driving operation adjustment information broadcast by a first autonomous driving device, where the autonomous driving operation adjustment information indicates an autonomous driving operation that needs to be performed by the first autonomous driving device; and the processing module is configured to determine a target traveling path based on the autonomous driving operation adjustment information, where the target traveling path is available for avoiding a collision between the second autonomous driving device and the first autonomous driving device.

With reference to the fourth aspect, in a possible implementation, the processing module is further configured to: determine, based on the autonomous driving operation adjustment information, a target color corresponding to the first autonomous driving device, where different colors indicate different danger levels to a driver of the second autonomous driving device; and render the first autonomous driving device in the target color and display the target color on a display.

With reference to the fourth aspect, in a possible implementation, the transceiver module is further configured to receive autonomous driving operation adjustment information broadcast by N other autonomous driving devices in a target region, where any one of the N autonomous driving devices is an autonomous driving device other than the first autonomous driving device in the target region; and the processing module is further configured to determine the target traveling path based on the autonomous driving operation adjustment information of the first autonomous driving device and autonomous driving operation adjustment information of each of the N autonomous driving devices.

With reference to the fourth aspect, in a possible implementation, the autonomous driving operation includes any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

With reference to the fourth aspect, in a possible implementation, the transceiver module is further configured to: broadcast first information after receiving the autonomous driving operation adjustment information broadcast by the first autonomous driving device, where the first information includes the autonomous driving operation adjustment information and a first identifier, and the first identifier indicates the first autonomous driving device.

According to a fifth aspect, this application provides an autonomous vehicle, including the communication apparatus according to any one of the third aspect or the possible implementations of the third aspect.

According to a sixth aspect, this application provides an autonomous vehicle, including the communication apparatus according to any one of the fourth aspect or the possible implementations of the fourth aspect.

According to a seventh aspect, this application provides a communication apparatus, including a memory and a processor. The memory is configured to store program instructions. The processor is configured to invoke the program instructions in the memory to perform the method according to any one of the first aspect or the possible implementations of the first aspect.

According to an eighth aspect, this application provides a communication apparatus, including a memory and a processor. The memory is configured to store program instructions. The processor is configured to invoke the program instructions in the memory to perform the method according to any one of the second aspect or the possible implementations of the second aspect.

According to a ninth aspect, this application provides a computer-readable medium, where the computer-readable medium stores program code to be executed by a computer, and the program code includes instructions used to perform the method according to any one of the first aspect, the second aspect, or the possible implementations of the first aspect or the second aspect.

According to a tenth aspect, this application provides a chip, including at least one processor and a communication interface. The communication interface and the at least one processor are interconnected through a line, and the at least one processor is configured to run a computer program or instructions, to perform the method according to any one of the first aspect, the second aspect, or the possible implementations of the first aspect or the second aspect.

According to an eleventh aspect, this application provides a computer program product. The computer program product includes computer program instructions. When the computer program instructions are run on a computer, the computer is enabled to implement the method according to any one of the first aspect or the possible implementations of the first aspect.

For technical effects brought by any one of the implementations of the third aspect to the eleventh aspect, refer to the technical effects brought by any one of the first aspect, the second aspect, or the possible implementations of the first aspect or the second aspect. Details are not described again.

### BRIEF DESCRIPTION OF DRAWINGS

FIG. 1 is a diagram of a structure of an autonomous driving device according to this application;
FIG. 2 is a diagram of a communication method according to this application;
FIG. 3 is a schematic flowchart of a communication method used when a first autonomous driving device communicates with a second autonomous driving device according to an embodiment of this application;
FIG. 4 is a diagram of a structure of a second MDC when the second MDC performs path planning according to an embodiment of this application;
FIG. 5 is a schematic flowchart of a communication method used when a first autonomous driving device communicates with a roadside infrastructure device according to another embodiment of this application;
FIG. 6 is a diagram of an architecture in which a first autonomous driving device communicates with a roadside infrastructure device according to another embodiment of this application;
FIG. 7 is a diagram of a structure of a communication apparatus according to an embodiment of this application; and
FIG. 8 is a diagram of a structure of a communication apparatus according to another embodiment of this application.

### DESCRIPTION OF EMBODIMENTS

To better describe technical solutions in embodiments of this application, the following first describes some concepts used in embodiments of this application.

### 1. Autonomous driving device

The autonomous driving device in this application may include a road vehicle, a water vehicle, an air vehicle, an industrial device, an agricultural device, an entertainment device, or the like. For example, the autonomous driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the autonomous driving device may be a transportation means like an airplane or a ship.

### 2. Computing platform

The computing platform is configured to provide powerful computing power support for an autonomous driving device, and may be considered as a "super brain" of intelligent driving. The computing platform may be, for example, a mobile data center (mobile data center, MDC), or a device or a chip that implements a function similar to a function of an MDC.

### 3. V2X technology

The vehicle-to-everything (vehicle-to-everything, V2X) technology is a further evolution of a device to device (device to device, D2D) technology, and is a communication technology that connects a vehicle-to-everything, where V indicates a vehicle, and X indicates any object that interacts with the vehicle.

Specifically, the V2X technology may include: vehicle-to-vehicle (vehicle-to-vehicle, V2V), vehicle-to-network (vehicle-to-network, V2N), vehicle-to-infrastructure (vehicle-to-infrastructure, V2I), vehicle-to-pedestrian (vehicle-to-pedestrian, V2P), or the like.

The V2V means that a vehicle-mounted device performs communication between vehicles. The vehicle-mounted device may obtain information, for example, a vehicle speed, a location, and a driving status of a surrounding vehicle in real time. An interactive platform may also be formed between the vehicles, to exchange information, for example, a text, a picture, and a video in real time. V2V communication is mainly used to avoid or reduce traffic accidents, vehicle supervision and management, and the like.

The V2N means that the vehicle-mounted device is connected to a cloud platform through an access network/core network. The cloud platform exchanges data with the vehicle, stores and processes obtained data, and provides various application services required by the vehicle. V2N communication is mainly applied to vehicle navigation, remote vehicle monitoring, emergency rescue, information entertainment services, and the like.

The V2I means that a vehicle-mounted device communicates with a roadside infrastructure (for example, a traffic light, a traffic camera, or a roadside unit). The roadside infrastructure may also obtain information about a vehicle in a nearby region and release various real-time information. V2I communication is mainly applied to a real-time information service, vehicle monitoring and management, electronic toll collection, and the like.

The V2P means that a vulnerable group on a road (including pedestrians, cyclists, and the like) communicates with vehicle-mounted devices through user equipment (for example, mobile phones, or laptops). V2P communication is mainly used to avoid or reduce traffic accidents, provide an information service, and the like.

4. An ultrasonic sensor (ultrasonic sensor, USS) is a safety auxiliary apparatus used when a vehicle is parked or reversed, and can notify a driver of a status of a surrounding obstacle through a sound or a more intuitive display. This eliminates troubles caused by the driver's front-to-back and left-to-right visits when the drive parks, reverses, and starts the vehicle, and helps the driver eliminate blind spots and blurred lines of sight.

### 5. Inertial measurement unit

The inertial measurement unit (inertial measurement unit, IMU) usually includes a gyroscope, an accelerometer, and an algorithm processing unit, is an apparatus configured to measure a three-axis attitude angle (or an angular rate) and an acceleration of an object, and is a very reliable positioning and attitude controller in an autonomous driving device.

### 6. Global navigation satellite system

The global navigation satellite system (global navigation satellite system, GNSS), also referred to as a global satellite navigation system, is a space-based radio navigation and positioning system that can provide a user with all-weather three-dimensional coordinates, speed, and time information at any place on the surface of the earth or near the earth space.

### 7. Radio detection and ranging

Radio detection and ranging (radio detection and ranging, RADAR) is usually used to detect a long-distance object and estimate a speed and an orientation of the object.

### 8. Light detection and ranging

The light detection and ranging (light detection and ranging, LIDAR) is a radar system that transmits a laser beam to detect characteristic quantities such as a position and a speed of a target. A working principle of the light detection and ranging is to transmit a detection signal (a laser beam) to a target, compare a received signal (a target echo) reflected from the target with the transmitted signal, and perform proper processing, to obtain related information of the target, for example, parameters such as a target distance, an orientation, a height, a speed, a posture, and even a shape, so as to detect, track, and identify the target, for example, an aircraft or a missile.

In recent years, with rapid development of autonomous driving technologies, an autonomous driving device (for example, an autonomous vehicle) is increasingly intelligent. In addition to supporting manual driving (also referred to as human driving), the autonomous driving device further supports autonomous driving.

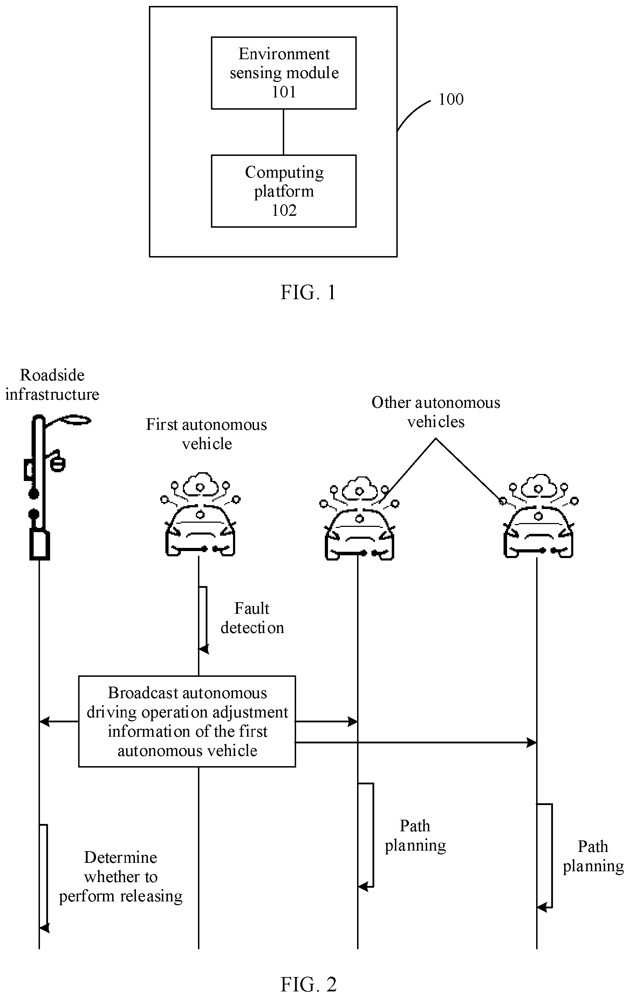

For example, FIG. 1 is a diagram of a structure of an autonomous driving device according to this application. As shown in FIG. 1, the autonomous driving device 100 includes an environment sensing module 101 and a computing platform 102.

The environment sensing module 101 may be configured to: obtain ambient environment information (for example, including information about a surrounding vehicle, information about a pedestrian, and information about a road surface) of the autonomous driving device 100, and transmit the information to the computing platform 102.

During specific implementation, different sensors may be deployed on the autonomous driving device 100 to obtain different information. For example, sensors such as a camera, an ultrasonic sensor, a lidar, and a millimeter-wave radar may be deployed on the autonomous driving device 100 to obtain external environment information.

The computing platform 102 may be considered as a computing platform of the autonomous driving device 100, and may analyze and process information transmitted by the environment sensing module 101, to generate a driving strategy of the autonomous driving device 100.

For example, the computing platform may be an MDC or a device or a chip that implements a function similar to that of an MDC.

In addition, the autonomous driving device 100 shown in FIG. 1 further includes a vehicle-mounted communication module (not shown in FIG. 1). The vehicle-mounted communication module is configured to exchange information with another device.

Generally, when the autonomous driving device shown in FIG. 1 travels in an autonomous driving mode, if the autonomous driving device 100 cannot autonomously complete autonomous driving due to some factors or conditions, a driver is required to immediately take over, to ensure safe traveling of the autonomous driving device 100. For example, when the autonomous driving device 100 travels in the autonomous driving mode, if a visual perception system of the autonomous driving device 100 cannot accurately identify the target object ahead due to heavy rain suddenly, the driver needs to immediately take over, to ensure safe traveling.

In this field, a process in which the autonomous driving device requires the driver to take over is referred to as a take over request (take over request, TOR) process. A TOR is very important in autonomous driving, and triggers control switching between the autonomous driving device and the driver.

Currently, when the autonomous driving device requires the driver to take over immediately, the autonomous driving device makes the "best effort" to achieve an emergency stop or send the TOR to prompt the driver to take over. For example, the TOR may be an alarm displayed on a dashboard or an alarm played through a speaker.

It may be understood that when the autonomous driving device requires the driver of the autonomous driving device to take over, the driver needs to quickly respond. If the driver needs to quickly respond, a prerequisite is that the driver has noticed the foregoing TOR.

However, in many cases, when the driver does not operate the autonomous driving device, the driver may be paying attention to another mobile device (for example, a mobile phone or a tablet computer), or even sometimes the driver wears a headset. In this case, the driver may not quickly respond to the TOR. As a result, the autonomous driving device may collide with another object (for example, another vehicle, a pedestrian, or infrastructure), and a traffic accident is caused. In other words, safety is low in a process of sending the take over request by the current autonomous driving device.

Based on such a scenario, this application provides a communication method and apparatus, to improve safety of the current autonomous driving device during occurrence of the take over request.

In summary, in the communication method provided in this application, when the autonomous driving device (assumed to be a first autonomous vehicle) is in an autonomous driving process, as shown in FIG. 2, a computing platform (assumed to be referred to as a first computing platform) in the first autonomous vehicle obtains autonomous driving operation adjustment information of the first autonomous vehicle based on a fault level determined through fault detection, and broadcasts the autonomous driving operation adjustment information of the current first autonomous vehicle to another autonomous vehicle or a roadside infrastructure, where the autonomous driving operation adjustment information indicates an autonomous driving operation that needs to be performed by a first autonomous driving device. Correspondingly, the another autonomous vehicle or the roadside infrastructure performs avoidance in advance based on the autonomous driving operation adjustment information of the first autonomous vehicle, to prevent a collision. For example, as shown in FIG. 2, the another autonomous vehicle may perform target path planning based on the autonomous driving operation adjustment information broadcast by the first autonomous vehicle, to avoid a collision with the first autonomous vehicle. The roadside infrastructure (for example, a highway lifting rod) may select, based on the autonomous driving operation adjustment information broadcast by the first autonomous vehicle, whether to perform releasing, to avoid a collision with the first autonomous vehicle.

The following describes in detail, by using specific embodiments, the technical solution of this application and how the foregoing technical problem is resolved in the technical solution of this application. The following several specific embodiments may be implemented independently, or may be combined with each other. A same or similar concept or process may not be described again in some embodiments.

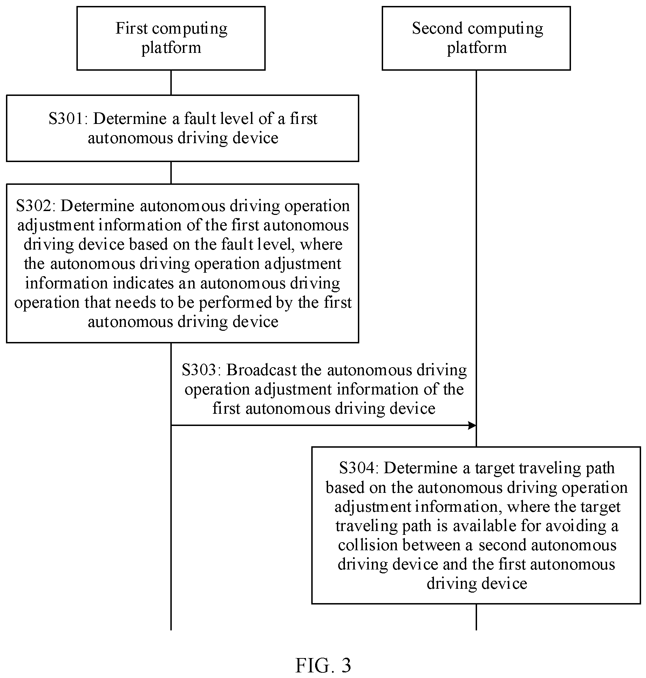

With reference to FIG. 3, a communication method provided in this application when a device that receives autonomous driving operation adjustment information is an autonomous driving device (also referred to as a second autonomous driving device) is described in detail.

As shown in FIG. 3, the communication method includes S301, S302, S303, and S304. S301, S302, and S303 are performed by a computing platform in a first autonomous driving device, and S304 is performed by a computing platform in the second autonomous driving device.

**In** this embodiment, the computing platform in the first autonomous driving device is also referred to as a first computing platform, and the computing platform in the second autonomous driving device is also referred to as a second computing platform.

S301: The first computing platform determines a fault level of the first autonomous driving device.

**In** this embodiment, a specific form of the first autonomous driving device is not particularly limited. For example, the first autonomous driving device may be a car, a truck, a motorcycle, a bus, a boat, an airplane, a helicopter, a lawn mower, a recreational vehicle, a playground vehicle, a construction device, a tram, a train, a trolley, or the like.

Generally, various sensors are deployed in the first autonomous driving device for environment sensing, and the various sensors report collected data to the first computing platform for analysis by the first computing platform. For example, the first computing platform may analyze camera data collected by a camera sensor, ultrasonic sensor data collected by an ultrasonic sensor, lidar data collected by a lidar, and millimeter-wave radar data collected by a millimeter-wave radar.

In this embodiment, the first computing platform may determine the current fault level of the first autonomous driving device by analyzing data of each sensor. The fault level indicates a severity of a fault that occurs on the first autonomous driving device, or the fault level indicates a severity of a fault that is to occur on the first autonomous driving device. The severity includes, for example, no fault, a mild fault, a moderate fault, and a severe fault.

For example, in an implementation solution, the first computing platform may first detect whether data collected by each sensor is abnormal, for example, detect whether the collected data is lost or has an error. If there is no abnormal data, it is determined that there is no fault. If there is abnormal data, the first computing platform further analyzes the abnormal data, determines a fault (including a current fault or a possible fault) of the first autonomous driving device, and determines a severity of the fault of the first autonomous vehicle based on the fault.

In this implementation, an implementation of detecting whether the collected data is lost, has an error, or the like may include: comparing the collected data with preset data to determine whether the collected data is lost, has an error, or the like.

S302: The first computing platform determines autonomous driving operation adjustment information of the first autonomous driving device based on the fault level, where the autonomous driving operation adjustment information indicates an autonomous driving operation that needs to be performed by the first autonomous driving device.

In this embodiment, when determining the fault level corresponding to the first autonomous driving device, the first computing platform obtains the autonomous driving operation adjustment information of the first autonomous driving device that corresponds to the fault level. The autonomous driving operation adjustment information indicates the autonomous driving operation that needs to be performed by the first autonomous driving device. Specifically, in this embodiment, the autonomous driving operation includes any one of the following:
(1) holding an autonomous driving task;
(2) exiting immediately after a TOR is sent;
(3) exiting immediately (Immediate Exit);
(4) sending a TOR and controlling an autonomous driving device before a driver takes over, which is also referred to as "TOR+graceful exit" in this application;
(5) sending a TOR and changing an autonomous driving function to adaptive cruise control (adaptive cruise control, ACC) deceleration and exit, which is also referred to as "TOR+degradation to ACC deceleration and exit" in this application;
(6) exiting immediately after safe parking;
(7) holding safe parking, where the holding means continuing safe parking;
(8) sending a TOR and exiting after a period of time (for example, x seconds), which is also referred to as "TOR+delayed exit" in this application; or
(9) sending a TOR and starting ACC deceleration and exit after a period of time (for example, x seconds), which is also referred to as "TOR+delayed ACC deceleration and exit" in this application.

In an implementation solution, a mapping relationship between at least one fault level and an autonomous driving operation adjustment may be prestored in the first autonomous driving device. Then, when determining the fault level of the first autonomous driving device, the first computing platform may first obtain, from the mapping relationship, the autonomous driving operation adjustment information that has the mapping relationship with the fault level of the first autonomous driving device.

S303: The first computing platform broadcasts the autonomous driving operation adjustment information of the first autonomous driving device. Correspondingly, the second computing platform receives the autonomous driving operation adjustment information.

In this embodiment, a type of the second autonomous driving device may be consistent with that of the first autonomous driving device, or may be inconsistent with that of the first autonomous driving device. This is not particularly limited in this application. For example, the second autonomous driving device may be a car, a truck, a motorcycle, a bus, a boat, an airplane, a helicopter, a lawn mower, a recreational vehicle, a playground vehicle, a construction device, a tram, a train, a trolley, or the like.

In this embodiment, after determining the autonomous driving operation adjustment information of the first autonomous driving device, the first computing platform broadcasts the autonomous driving operation adjustment information, so that some other surrounding devices (for example, including a roadside infrastructure like a highway lifting rod or another autonomous vehicle) may learn of the autonomous driving operation to be performed by the first autonomous driving device.

Optionally, in this embodiment, the second computing platform that receives the autonomous driving operation adjustment information broadcast by the first autonomous driving device may further broadcast first information. The first information includes the autonomous driving operation adjustment information and a first identifier, and the first identifier indicates the first autonomous driving device. In this way, the autonomous driving operation adjustment information of the first autonomous driving device can be broadcast farther, so that more other devices can learn of the autonomous driving operation to be performed by the first autonomous driving device.

For example, it is assumed that when the first computing platform broadcasts the autonomous driving operation adjustment information of the first autonomous driving device, a broadcast range of the first computing platform is within 200 meters around. **In** this case, if another vehicle or a roadside infrastructure within 500 meters nearby is required to learn of the autonomous driving operation adjustment information of the first autonomous driving device, another vehicle or a roadside infrastructure within 200 meters away from the first autonomous driving device may further broadcast, after receiving the autonomous driving operation adjustment information of the first autonomous driving device, the first information including the autonomous driving operation adjustment information of the first autonomous driving device and the first identifier. **In** this way, another vehicle or the roadside infrastructure that is more than 200 meters away from the first autonomous driving device can also learn of the autonomous driving operation to be performed by the first autonomous driving device.

In this embodiment, during specific implementation, the first computing platform may broadcast the autonomous driving operation adjustment information of the first autonomous driving device based on a V2X technology.

S304: The second computing platform determines a target traveling path based on the autonomous driving operation adjustment information, where the target traveling path is available for avoiding a collision between the second autonomous driving device and the first autonomous driving device.

In this embodiment, the second autonomous driving device that receives the autonomous driving operation adjustment information of the first autonomous driving device may learn, based on the autonomous driving operation adjustment information of the first autonomous driving device, the autonomous driving operation to be performed by the first autonomous driving device. Further, path planning may be performed based on the autonomous driving operation to be performed by the first autonomous driving device, to determine a target traveling path. When traveling on the target traveling path, the second autonomous driving device may avoid colliding with the first autonomous driving device. In this way, the second autonomous driving device performs avoidance in advance, to avoid a traffic accident and improve safety.

For example, the second computing platform receives the autonomous driving operation adjustment information of the first autonomous driving device located at the rear: TOR+degradation to ACC deceleration and exit; and determines, based on the sensor data, that the distance with the first autonomous driving device is small. In this case, the target traveling path may be determined with reference to deceleration of the first autonomous driving device at the rear, the autonomous driving operation adjustment information of the first autonomous driving device, and the distance, to perform avoidance and give a way to the first autonomous driving device, so that the first autonomous driving device performs safe parking.

In an implementation solution, determining the target traveling path based on autonomous driving operation adjustment information of the first autonomous driving device includes: The second computing platform further receives autonomous driving operation adjustment information broadcast by N other autonomous driving devices in a target region, where any one of the N autonomous driving devices is an autonomous driving device other than the first autonomous driving device in the target region; and the second computing platform determines the target traveling path based on the autonomous driving operation adjustment information of the first autonomous driving device and autonomous driving operation adjustment information of each of the N autonomous driving devices.

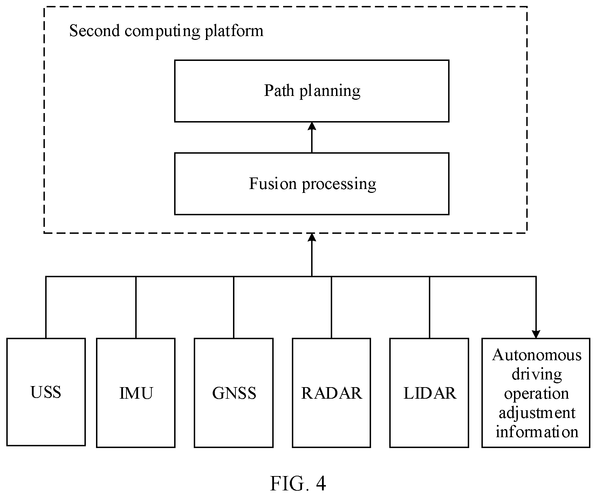

As shown in FIG. 4, when the second computing platform specifically determines the target traveling path based on the autonomous driving operation adjustment information of the first autonomous driving device and the autonomous driving operation adjustment information of each of the N autonomous driving devices, the second computing platform may perform sensing fusion processing based on data collected by different sensors (for example, including a USS sensor, an IMU sensor, a GNSS sensor, a RADAR sensor, and a LIDAR sensor), the received autonomous driving operation adjustment information of the first autonomous driving device, and the autonomous driving operation adjustment information of each of the N other autonomous driving devices, and then perform path planning based on a result of the sensing fusion processing, to determine the target path.

It may be understood that, after determining the autonomous driving operation adjustment information of the first autonomous driving device based on the fault level of the first autonomous driving device, the first computing platform in the first autonomous driving device broadcasts the autonomous driving operation adjustment information of the first autonomous driving device to warn another device in advance. Correspondingly, the second autonomous driving device that receives the autonomous driving operation adjustment information broadcast by the first autonomous driving device may plan, based on the autonomous driving operation that needs to be performed by the first autonomous driving device and that is indicated by the autonomous driving operation adjustment information broadcast by the first autonomous driving device, a target traveling path that can avoid a collision between the second autonomous driving device and the first autonomous driving device, to avoid a collision with the first autonomous driving device in advance.

It may be further understood that, according to the communication method provided in this application, when the first computing platform in the first autonomous driving device determines that the first autonomous driving device cannot complete an autonomous driving operation and outputs the TOR to require the driver to take over immediately, even if the driver in the first autonomous driving device does not notice the TOR, because the first computing platform broadcasts the autonomous driving operation adjustment information, the second autonomous driving device has learned of the autonomous driving operation that needs to be performed by the first autonomous driving device, and the target travel path for avoiding the first autonomous driving device in advance is determined based on the autonomous driving operation adjustment information. Therefore, a collision between the first autonomous driving device and the second autonomous driving device is avoided, a traffic accident is avoided, and safety of the autonomous driving device during occurrence of the take over request is improved.

In an optional embodiment, the first computing platform in the first autonomous driving device may further determine, based on the autonomous driving operation adjustment information, whether to request the driver of the first autonomous driving device to take over the first autonomous driving device; when determining to request the driver of the first autonomous driving device to take over the first autonomous driving device, output a take over request TOR, where the TOR indicates the driver of the first autonomous driving device to take over the first autonomous driving device.

For example, when the autonomous driving operation adjustment information is exiting immediately after the TOR is sent, the first computing platform may further determine that the driver of the first autonomous driving device currently needs to be requested to take over the first autonomous driving device, and output the TOR to the driver of the first autonomous driving device, to prompt the driver of the first autonomous driving device to take over.

It should be noted herein that a form of how to output the TOR is not limited in this embodiment of this application. For example, an alarm is generated through a voice like beeps of "Didi" or "Dudu", or through displaying of the alarm on a dashboard.

In this implementation, the first computing platform may prompt, in a manner of outputting the TOR, the driver to take over. This helps ensure a safe form of the first autonomous driving device when the first autonomous driving device cannot complete autonomous driving.

In an optional embodiment, in this embodiment, after receiving the autonomous driving operation adjustment information, a second MDC in the second autonomous driving device may further determine, based on the autonomous driving operation adjustment information of the first autonomous driving device, a target color corresponding to the first autonomous driving device, where different colors indicate different danger levels to a driver of the second autonomous driving device; and render the first autonomous driving device in the target color and display the target color on a display.

For example, when determining, based on the autonomous driving operation adjustment information broadcast by the first autonomous driving device, that the first autonomous driving device is autonomous driving and is not in danger, the second computing platform may render the first autonomous driving device in green and then display green on the display.

For example, when determining, based on the autonomous driving operation adjustment information broadcast by the first autonomous driving device, that the first autonomous driving device is driven by a driver and is not in danger, the second computing platform may render the first autonomous driving device in gray and then display gray on the display.

It may be understood that, in this implementation, the driver may view a danger level of the first autonomous driving device through the display, so that the driver can choose, based on the danger level, whether to perform self-takeover for avoidance, so as to prevent a collision with the first autonomous driving device.

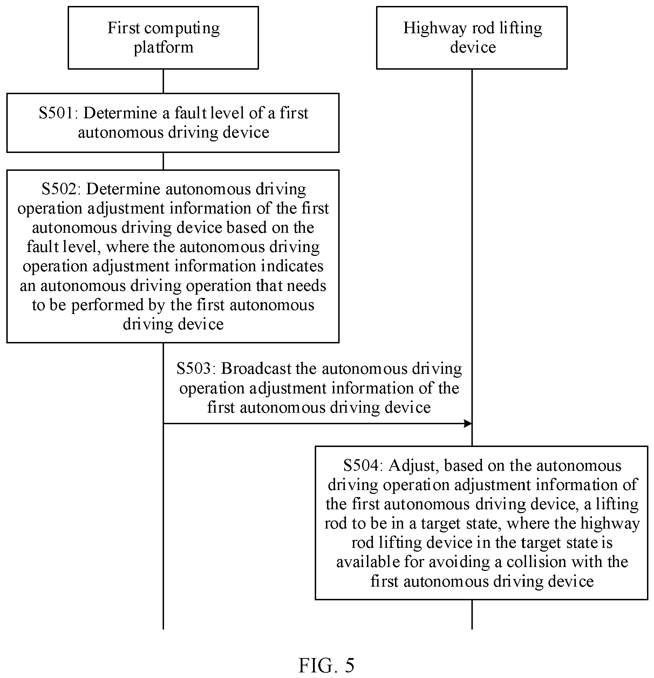

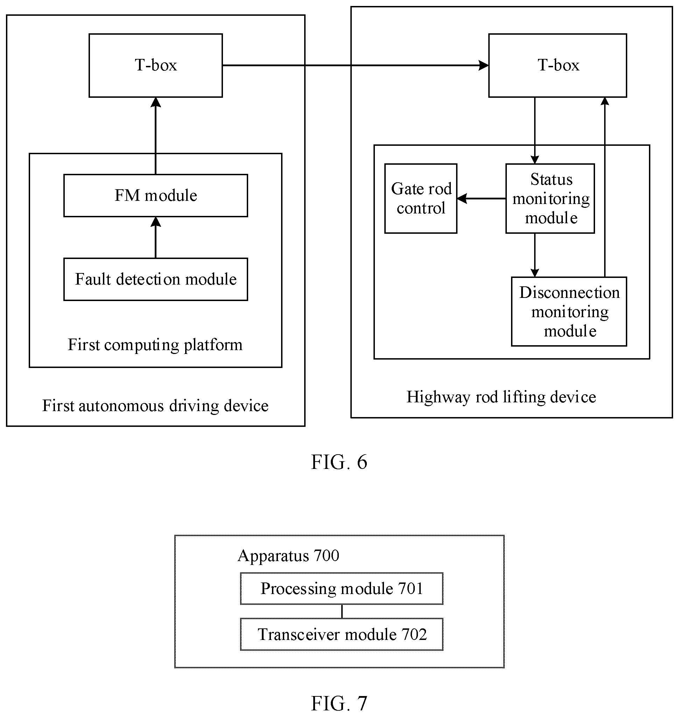

The foregoing describes, based on a fact that the device that receives the autonomous driving operation adjustment information broadcast by the first autonomous driving device is an autonomous driving device, a method for improving safety of the autonomous driving device during occurrence of a take over request in this application. It may be understood that, in addition to colliding with the autonomous driving device, the first autonomous driving device may collide with some other devices, for example, a roadside infrastructure like a highway lifting rod. Therefore, in this application, the following describes in detail a communication method between the first autonomous driving device and the roadside infrastructure (a highway lifting rod is used as an example in this embodiment) with reference to FIG. 5 and FIG. 6.

S501: A first computing platform in the first autonomous driving device determines a fault level of the first autonomous driving device.

S502: The first computing platform determines autonomous driving operation adjustment information of the first autonomous driving device based on the fault level, where the autonomous driving operation adjustment information indicates an autonomous driving operation that needs to be performed by the first autonomous driving device.

S503: The first computing platform broadcasts the autonomous driving operation adjustment information of the first autonomous driving device. Correspondingly, the highway lifting rod receives the autonomous driving operation adjustment information of the first autonomous driving device.

For specific descriptions of S501 to S503, refer to the descriptions in S301 to S303. An only difference between S501 to S503 and S301 to S303 lies in that a device that receives the autonomous driving operation adjustment information of the first autonomous driving device changes from a second autonomous driving device to the highway rod lifting device.

S504: The highway rod lifting device adjusts, based on the autonomous driving operation adjustment information of the first autonomous driving device, a lifting rod to be in a target state, where the highway rod lifting device in the target state is available for avoiding a collision with the first autonomous driving device.

For example, FIG. 6 is a diagram of a structure of communication between the first autonomous driving device and the highway rod lifting device according to this application.

As shown in FIG. 6, the first MDC includes a fault detection module and a fault manager (fault manager, FM) module. The fault detection module is configured to detect a current fault level of the first autonomous driving device, and the FM module is configured to map the fault level to the autonomous driving operation adjustment information of the first autonomous driving device.

As shown in FIG. 6, the highway rod lifting device includes a status monitoring module. The status monitoring module may be configured to monitor the autonomous driving operation adjustment information of the first autonomous driving device.

Specifically, the first computing platform may broadcast the autonomous driving operation adjustment information of the first autonomous driving device by using a telematics box (telematics box, T-box for short). After detecting the autonomous driving operation adjustment information of the first autonomous driving device, the status monitoring module in the highway rod lifting device determines a status of a gate rod based on an autonomous driving operation that needs to be performed by the first autonomous driving device and that is indicated by the autonomous driving operation adjustment information. For example, if the autonomous driving operation that needs to be performed by the first autonomous driving device and that is indicated by the autonomous driving operation adjustment information is "TOR+exiting immediately", and it is learned, by analyzing data collected by the sensor, that the first autonomous driving device is very close to the highway rod lifting device, to enable the first autonomous driving device to safely stop, the first autonomous driving device should be enabled to safely pass through the gate rod. Therefore, the gate rod should be controlled for releasing.

Optionally, in this embodiment, the highway rod lifting device may further include a disconnection monitoring module. The disconnection monitoring module may be configured to monitor whether the first computing platform normally broadcasts the autonomous driving operation adjustment information of the first autonomous driving device.

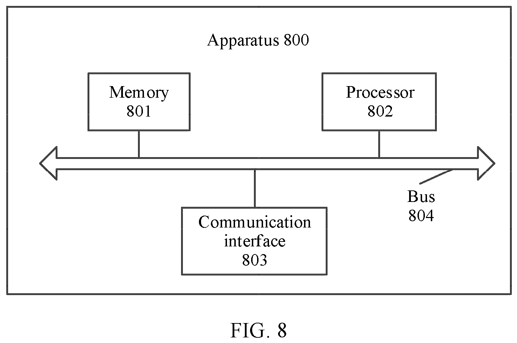

The foregoing describes the communication methods provided in this application with reference to FIG. 2 to FIG. 6. The following describes communication apparatuses provided in this application with reference to FIG. 7 and FIG. 8.

FIG. 7 is a diagram of a structure of a communication apparatus according to an embodiment of this application. Specifically, as shown in FIG. 7, the apparatus 700 includes a processing module 701 and a transceiver module 702.

In a first embodiment, the communication apparatus 700 is deployed in a first autonomous driving device.

Specifically, the processing module 701 is configured to: determine a fault level of the first autonomous driving device; and determine autonomous driving operation adjustment information of the first autonomous driving device based on the fault level, where the autonomous driving operation adjustment information indicates an autonomous driving operation that needs to be performed by the first autonomous driving device. The transceiver module 702 is configured to broadcast the autonomous driving operation adjustment information.

In a possible implementation, the processing module 701 is further configured to: determine, based on the autonomous driving operation adjustment information, whether to request a driver of the first autonomous driving device to take over the first autonomous driving device; and when determining to request the driver of the first autonomous driving device to take over the first autonomous driving device, output a take over request TOR, where the TOR indicates the driver of the first autonomous driving device to take over the first autonomous driving device.

In a possible implementation, the first computing platform broadcasts the autonomous driving operation adjustment information based on a vehicle-to-everything V2X technology.

In a possible implementation, the autonomous driving operation includes any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

In a possible implementation, the processing module 701 is further configured to determine the autonomous driving operation adjustment information of the first autonomous driving device based on the fault level and a preset mapping relationship between a fault level and autonomous driving operation adjustment information.

In a second embodiment, the communication apparatus 700 is deployed in a second autonomous driving device.

Specifically, the transceiver module 702 is configured to receive autonomous driving operation adjustment information broadcast by a first autonomous driving device, where the autonomous driving operation adjustment information indicates an autonomous driving operation that needs to be performed by the first autonomous driving device. The processing module 701 is configured to determine a target traveling path based on the autonomous driving operation adjustment information, where the target traveling path is available for avoiding a collision between the second autonomous driving device and the first autonomous driving device.

In a possible implementation, the processing module 701 is further configured to: determine, based on the autonomous driving operation adjustment information, a target color corresponding to the first autonomous driving device, where different colors indicate different danger levels to a driver of the second autonomous driving device; and render the first autonomous driving device in the target color and display the target color on a display.

In a possible implementation, the transceiver module 702 is further configured to receive autonomous driving operation adjustment information broadcast by N other autonomous driving devices in a target region, where any one of the N autonomous driving devices is an autonomous driving device other than the first autonomous driving device in the target region; and the processing module 701 is further configured to determine the target traveling path based on the autonomous driving operation adjustment information of the first autonomous driving device and autonomous driving operation adjustment information of each of the N autonomous driving devices.

In a possible implementation, the autonomous driving operation includes any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

In a possible implementation, the transceiver module 702 is further configured to: broadcast first information after receiving the autonomous driving operation adjustment information broadcast by the first autonomous driving device, where the first information includes the autonomous driving operation adjustment information and a first identifier, and the first identifier indicates the first autonomous driving device.

FIG. 8 is a diagram of a structure of a communication apparatus according to another embodiment of this application. The apparatus shown in FIG. 8 may be configured to perform the method in any one of the foregoing embodiments.

As shown in FIG. 8, the apparatus 800 in this embodiment includes a memory 801 and a processor 802. Optionally, the apparatus 800 further includes a communication interface 803 and a bus 804. The memory 801, the processor 802, and the communication interface 803 are communicatively connected to each other by using the bus 804.

The memory 801 may be a read-only memory (read-only memory, ROM), a static storage device, a dynamic storage device, or a random access memory (random access memory, RAM). The memory 801 may store a program. When the program stored in the memory 801 is executed by the processor 802, the processor 802 is configured to perform steps of the methods shown in FIG. 2 to FIG. 6.

The processor 802 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 2 to FIG. 6 in this application.

The processor 802 may be an integrated circuit chip and has a signal processing capability. In an implementation process, the steps of the methods in FIG. 2 to FIG. 6 in embodiments of this application may be completed by an integrated logic circuit of hardware in the processor 802 or by using instructions in a form of software.

The foregoing processor 802 may be a general-purpose processor, a digital signal processor (digital signal processor, DSP), an ASIC, a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor, functions that need to be performed by units included in the apparatus in this application. For example, the steps/functions in the embodiments shown in FIG. 2 to FIG. 6 may be performed.

The communication interface 803 may use, but not limited to, a transceiver apparatus of a transceiver type, to implement communication between the apparatus 800 and another device or a communication network.

The bus 804 may include a channel on which information is transmitted between the components (for example, the memory 801, the processor 802, and the communication interface 803) of the apparatus 800.

It should be understood that, the apparatus 800 shown in this embodiment of this application may be an electronic device, or may be a chip configured in an electronic device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first computing platform, wherein the first computing platform is deployed in a first autonomous driving device, and the method comprises:
determining a fault level of the first autonomous driving device;
determining autonomous driving operation adjustment information of the first autonomous driving device based on the fault level, wherein the autonomous driving operation adjustment information indicates an autonomous driving operation that needs to be performed by the first autonomous driving device; and
broadcasting the autonomous driving operation adjustment information.

2. The method according to claim 1, wherein the method further comprises:
determining, based on the autonomous driving operation adjustment information, whether to request a driver of the first autonomous driving device to take over the first autonomous driving device; and
outputting a take over request TOR when determining to request the driver of the first autonomous driving device to take over the first autonomous driving device, wherein the TOR indicates the driver of the first autonomous driving device to take over the first autonomous driving device.

3. The method according to claim 1 or 2, wherein the first computing platform broadcasts the autonomous driving operation adjustment information based on a vehicle-to-everything V2X technology.

4. The method according to any one of claims 1 to 3, wherein the autonomous driving operation comprises any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

5. The method according to any one of claims 1 to 4, wherein the determining autonomous driving operation adjustment information of the first autonomous driving device based on the fault level comprises:
determining the autonomous driving operation adjustment information of the first autonomous driving device based on the fault level and a preset mapping relationship between a fault level and autonomous driving operation adjustment information.

6. A communication method, applied to a second computing platform, wherein the second computing platform is deployed in a second autonomous driving device, and the method comprises:
receiving autonomous driving operation adjustment information broadcast by a first autonomous driving device, wherein the autonomous driving operation adjustment information indicates an autonomous driving operation that needs to be performed by the first autonomous driving device; and
determining a target traveling path based on the autonomous driving operation adjustment information, wherein the target traveling path is available for avoiding a collision between the second autonomous driving device and the first autonomous driving device.

7. The method according to claim 6, wherein the method further comprises:
determining, based on the autonomous driving operation adjustment information, a target color corresponding to the first autonomous driving device, wherein different colors indicate different danger levels to a driver of the second autonomous driving device; and
rendering the first autonomous driving device in the target color and displaying the target color on a display.

8. The method according to claim 6 or 7, wherein the determining a target traveling path based on the autonomous driving operation adjustment information comprises:
receiving autonomous driving operation adjustment information broadcast by N other autonomous driving devices in a target region, wherein any one of the N autonomous driving devices is an autonomous driving device other than the first autonomous driving device in the target region; and
determining the target traveling path based on the autonomous driving operation adjustment information of the first autonomous driving device and autonomous driving operation adjustment information of each of the N autonomous driving devices.

9. The method according to any one of claims 6 to 8, wherein the autonomous driving operation comprises any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

10. The method according to any one of claims 6 to 9, wherein the method further comprises:
broadcasting first information after receiving the autonomous driving operation adjustment information broadcast by the first autonomous driving device, wherein the first information comprises the autonomous driving operation adjustment information and a first identifier, and the first identifier indicates the first autonomous driving device.

11. A communication apparatus, deployed in a first autonomous driving device, wherein the apparatus comprises a processing module and a transceiver module, wherein
the processing module is configured to: determine a fault level of the first autonomous driving device; and determine autonomous driving operation adjustment information of the first autonomous driving device based on the fault level, wherein the autonomous driving operation adjustment information indicates an autonomous driving operation that needs to be performed by the first autonomous driving device; and
the transceiver module is configured to broadcast the autonomous driving operation adjustment information.

12. The apparatus according to claim 11, wherein the processing module is further configured to:
determine, based on the autonomous driving operation adjustment information, whether to request a driver of the first autonomous driving device to take over the first autonomous driving device; and
output a take over request TOR when determining to request the driver of the first autonomous driving device to take over the first autonomous driving device, wherein the TOR indicates the driver of the first autonomous driving device to take over the first autonomous driving device.

13. The apparatus according to claim 11 or 12, wherein the transceiver module broadcasts the autonomous driving operation adjustment information based on a vehicle-to-everything V2X technology.

14. The apparatus according to any one of claims 11 to 13, wherein the autonomous driving operation comprises any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

15. The apparatus according to any one of claims 11 to 14, wherein the processing module is further configured to:
determine the autonomous driving operation based on the fault level and a preset mapping relationship between a fault level and an autonomous driving operation adjustment.

16. A communication apparatus, deployed in a second autonomous driving device, wherein the apparatus comprises a processing module and a transceiver module, wherein
the transceiver module is configured to receive autonomous driving operation adjustment information broadcast by a first autonomous driving device, wherein the autonomous driving operation adjustment information indicates an autonomous driving operation that needs to be performed by the first autonomous driving device; and
the processing module is configured to determine a target traveling path based on the autonomous driving operation adjustment information, wherein the target traveling path is available for avoiding a collision between the second autonomous driving device and the first autonomous driving device.

17. The apparatus according to claim 16, wherein the processing module is further configured to:
determine, based on the autonomous driving operation adjustment information, a target color corresponding to the first autonomous driving device, wherein different colors indicate different danger levels to a driver of the second autonomous driving device; and
render the first autonomous driving device in the target color and display the target color on a display.

18. The apparatus according to claim 16 or 17, wherein
the transceiver module is further configured to receive autonomous driving operation adjustment information broadcast by N other autonomous driving devices in a target region, wherein any one of the N autonomous driving devices is an autonomous driving device other than the first autonomous driving device in the target region; and
the processing module is further configured to determine the target traveling path based on the autonomous driving operation adjustment information of the first autonomous driving device and autonomous driving operation adjustment information of each of the N autonomous driving devices.

19. The apparatus according to any one of claims 16 to 18, wherein the autonomous driving operation comprises any one of the following operations: holding an autonomous driving task, exiting immediately after a TOR is sent, exiting immediately, sending a TOR and controlling an autonomous driving device before a driver takes over, sending a TOR and changing an autonomous driving function to ACC deceleration and exit, exiting immediately after safe parking, holding safe parking, sending a TOR and exiting after a period of time, or sending a TOR and starting ACC deceleration and exit after a period of time.

20. The apparatus according to any one of claims 16 to 19, wherein the transceiver module is further configured to:
broadcast first information after receiving the autonomous driving operation adjustment information broadcast by the first autonomous driving device, wherein the first information comprises the autonomous driving operation adjustment information and a first identifier, and the first identifier indicates the first autonomous driving device.

21. An autonomous vehicle, comprising the communication apparatus according to any one of claims 11 to 15.

22. An autonomous vehicle, comprising the communication apparatus according to any one of claims 16 to 20.

23. A communication apparatus, comprising a memory and a processor, wherein
the memory is configured to store program instructions; and
the processor is configured to invoke the program instructions in the memory to perform the method according to any one of claims 1 to 5 or claims 6 to 10.

24. A computer-readable medium, wherein the computer-readable medium stores program code for computer execution, and the program code comprises instructions used to perform the method according to any one of claims 1 to 5 or claims 6 to 10.

25. A chip, comprising at least one processor and a communication interface, wherein the communication interface and the at least one processor are interconnected through a line, and the at least one processor is configured to run a computer program or instructions, to perform the method according to any one of claims 1 to 5 or claims 6 to 10.
